Europäisches Patentamt

European Patent Office

Office européen des brevets

(19)

(11) Veröffentlichungsnummer: **0 019 658**
**B1**

(12)                                   # EUROPÄISCHE PATENTSCHRIFT

(45) Veröffentlichungstag der Patentschrift:
27.10.82

(21) Anmeldenummer: 79103016.6

(22) Anmeldetag: 17.08.79

(51) Int. Cl.³: **B 01 D 23/10,** B 01 D 23/18,
C 02 F 3/04, C 02 F 3/10

(54) **Filteranlage für die Wasseraufbereitung.**

(30) Priorität: **31.05.79 CH 5083/79**

(43) Veröffentlichungstag der Anmeldung:
**10.12.80 Patentblatt 80/25**

(45) Bekanntmachung des Hinweises auf die Patenterteilung:
**27.10.82 Patentblatt 82/43**

(84) Benannte Vertragsstaaten:
**AT DE FR GB IT NL**

(56) Entgegenhaltungen:
**FR-A-1 013 722**
**FR-A-1 405 568**
**FR-A-2 264 578**
**FR-E-62 948**
**GB-A-187 259**
**NL-C-97 017**
**US-A-1 633 081**

(73) Patentinhaber: **GEBRÜDER SULZER
AKTIENGESELLSCHAFT, Zürcherstrasse 9,
CH-8401 Winterthur (CH)**

(72) Erfinder: **Tylmann, Josef, Brunngasse,
CH-8400 Winterthur (CH)**

(74) Vertreter: **Sparing, Nikolaus, Dipl.-Ing.,
Rethelstrasse 123, D-4000 Düsseldorf 1 (DE)**

Filteranlage für die Wasseraufbereitung

Die Erfindung betrifft eine Filteranlage, insbesondere für die Wasseraufbereitung, mit mindestens einem rückspülbaren Filterfeld, in dem als Durchgangsorgane für das gefilterte Medium Filterdüsen vorhanden sind, die in mindestens einem, mit den Düsenköpfen nach unten auf dem betonierten Boden des Filterfeldes lösbar fixierten Drainagerohr aufgereiht sind, das seinerseits über ein in ein unter dem Filterboden angeordnetes Filtrat-Sammelrohr eintauchendes Tauchrohr mit diesem verbunden ist, wobei die Anlage darüber hinaus mit einer Rückspülvorrichtung zur periodischen Reinigung der Filtermasse mit Hilfe von Druckluft und Druckwasser ausgerüstet ist, und das Sammelrohr gleichzeitig als Zuleitung für mindestens ein Rückspülmedium dient.

Filteranlagen der genannten Art sind im allgemeinen mit aus Beton gefertigten rechteckigen Filterfeldern ausgestattet, in denen, eingebettet das körnige Filtermaterial, mit Düsen bestückte Drainagerohre auf dem Boden gelagert sind, in denen das gereinigte Filtrat gesammelt und aus der Anlage weggeführt wird; die Düsen sind dabei vorzugsweise im unteren Scheitelpunkt der Drainagerohre angeordnet, während die Drainagerohre mit einem Sammelrohr für das Filtrat verbunden sind, das in einer vertieften betonierten Wanne unter dem Boden des Filterfeldes senkrecht zur Längsrichtung der Drainagerohre verläuft (GB-A-187 259).

Gegenüber anderen bekannten Anlagen, bei denen die die Drainagerohre direkt in den Filterboden einbetoniert werden — was sehr leicht zu Beschädigungen der relativ empfindlichen Düsen führen kann — hat diese Anlage zwar den Vorteil, daß die Drainagerohre erst nach Abschluß der Betonierarbeiten eingesetzt werden können, die Verlegung eines Sammelrohres in einer Betonwanne bringt jedoch einen erhöhten Aufwand.

Bildet man — um dies zu vermeiden — die Betonwanne direkt als Sammelkanal für das Filtrat aus und ist für derartige Anlagen in bekannter Weise eine kombinierte Luft/Wasser-Rückspülung vorgesehen, so ergeben sich Schwierigkeiten bei der luftdichten Verbindung zwischen Betondecke des Sammelkanals und den an den Drainagerohren angesetzten Tauchrohren; eine luftdichte Verbindung ist notwendig, um ein unkontrolliertes direktes — d. h. ohne eine gleichmäßige Verteilung in den Drainagerohren — Einfließen der Spülluft in das Filterfeld zu verhindern.

Aus der FR-A-1 405 568 ist es zwar bekannt, die rohrartigen Verlängerungen von Filterdüsen nicht direkt in einen Betonboden einzuschrauben, sondern in diesen Boden zuerst einen Düsentragteil einzubetonieren, an bzw. in dem die Düsen befestigt werden. Eine luftdichte Verbindung wird dabei dadurch erreicht, daß die Düsen mit Hilfe eines Gewindes und einer Mutter auf die Tragteile aufgepreßt oder durch ein Einschrauben in diese Düsentragteile bzw. in elastische Haltebüchsen eingepreßt werden. Ein solches An- oder Einschrauben ist bei Tauchrohren, die an Drainagerohre angesetzt sind, nicht möglich.

Aufgabe der Erfindung ist es, eine Verlegung der Drainagerohre in dem Filterbett zu ermöglichen, bei der die Drainagerohre nicht nur erst nach Fertigstellung des Filterbodens verlegt werden können, sondern auch auf einfache Weise eine luftdichte Verbindung zwischen betoniertem Filterboden und am Drainagerohr angesetzten Tauchrohr sichergestellt wird. Nach der Erfindung wird die geschilderte Aufgabe dadurch gelöst, daß in den die Decke eines Filtrat-Sammelkanals bildenden Boden des Filterfeldes ein manschettenartiges Verbindungselement einbetoniert ist, in das das Tauchrohr gasdicht einsteckbar ist.

Dadurch wird ermöglicht, daß der Filterboden mit den Verbindungselementen vollständig fertig betoniert werden kann, ohne daß die Drainagerohre bereits verlegt sind; diese können vielmehr in rationeller Weise in Werkstätten zusammengebaut und fertig montiert auf die Baustelle geliefert werden. Dort müssen sie lediglich unter geringem Zeitaufwand in die Verbindungselemente eingesteckt und beispielsweise durch Durchgangsschrauben oder Rohrschellen fixiert werden. Ein weiterer Vorteil der vorliegenden Erfindung ist, daß die Drainagerohre jederzeit lösbar und auswechselbar sind.

Um das Verbindungselement in vertikaler Richtung im Filterbett zu fixieren, ist es vorteilhaft, seine Manschette zum Sammelkanal hin konisch zu erweitern und/oder es mit mindestens einem flanschartigen Ansatz zu versehen, in den dann beispielsweise die Bolzen der Durchgangsschrauben für die Befestigung der Drainagerohre eingeschraubt sein können.

Um die Endmontage der vorgefertigten Drainagerohre bei einer Befestigung mit Durchgangsschrauben zu erleichtern, ist es zweckmäßig, die Winkellage der dafür notwendigen Gewindebohrungen in dem flanschartigen Ansatz der Verbindungselemente relativ zur Achse der Drainagerohre zu fixieren.

Falls erforderlich, kann zwischen dem Tauchrohr und dem Verbindungselement ein Dichtelement vorgesehen sein, das den Durchtritt vom körnigen Filtermaterial aus dem Filterbett in den Sammelraum für das Filtrat verhindert.

Die Erfindung wird im folgenden anhand von Ausführungsbeispielen im Zusammenhang mit der Zeichnung näher erläutert.

Fig. 1 zeigt in einem Ausschnitt aus einem Filterfeld einen Schnitt senkrecht zur Achse des Sammelkanals durch einen Filterboden, auf dem ein Drainagerohr montiert und fixiert ist;

Fig. 2 ist in gleicher Darstellung ein zweites Ausführungsbeispiel;

Fig. 3 gibt — ebenfalls in gleicher Darstellung — ein drittes Ausführungsbeispiel wieder.

Auf dem aus Beton gegossenen Filterbettboden 1, der gleichzeitig die Decke eines unter ihm angeordneten und mit ihm in einem Arbeitsgang gegossenen Sammelkanals 2 bildet, ist ein Drainagerohr 3 montiert, in dem in Längsrichtung Filterdüsen 4 bekannter Bauart in gleichen Abständen hintereinander aufgereiht sind. Mit den Köpfen der Filterdüsen 4 als Auflage ist das Drainagerohr 3 auf dem Betonboden 1 abgestellt und über in diesem verschraubte Rohrschellen 7 fixiert. Der Filterboden 1 ist mit einer Vielzahl der bekannten Drainagerohre 3 bedeckt.

Zwischen zwei Filterdüsen 4 zweigt oberhalb des Reinwasser-Sammelkanals 2 aus dem Drainagerohr 3 ein Anschluß- oder Tauchrohr 5 ab, das durch ein Verbindungselement 6, das seinerseits im Boden 1 einbetoniert ist, in den Reinwasser-Sammelkanal 2 führt.

Alle Drainagerohre 3 eines Filterbetts sind auf diese Weise mit ihren Tauchrohren 5 in Längsrichtung des Sammelkanals 2 hintereinander angeordnet. Um in bekannter Weise für eine kombinierte Luft/Wasser-Rückspülung ein über die Länge des Sammelkanals 2 gleichmäßiges Luftpolster aufbauen zu können, ist jedes Tauchrohr 5 im gleichen Abstand von seinem freien Ende mit einer Luftdurchtrittsöffnung 9 versehen.

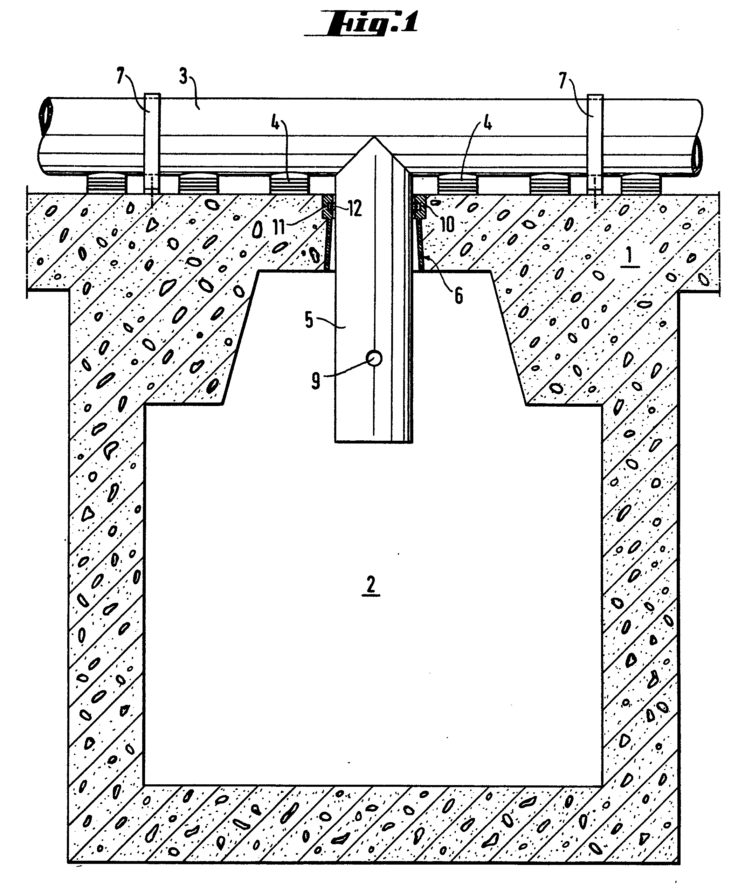

Das Verbindungselement 6, das beim Betonieren des Bodens 1 auf der Verschalung für die Decke des Sammelkanals 2 fixiert und einbetoniert worden ist, hat beim Ausführungsbeispiel nach Fig. 1 eine sich zum Sammelkanal 2 hin erweiternde konische Form, durch die verhindert wird, daß es vom Kanal 2 her beispielsweise durch den Druck des Rückspülwassers aus dem Boden 1 herausgedrückt werden kann. An seinem oberen Ende trägt es einen flanschartigen Ansatz 10. Dieser umfaßt einen ringförmigen Hohlraum 11, in den ein Dichtelement 12 eingelegt ist, durch das — wie bereits kurz erwähnt — der Sammelkanal 2 gegen das Filterbett bei eingesteckten Tauchrohren 5 abgedichtet ist. Im ersten Ausführungsbeispiel sind die einzelnen Drainagerohre 3 durch mit dem Filterboden 1 verschraubte Rohrschellen 7 gehalten.

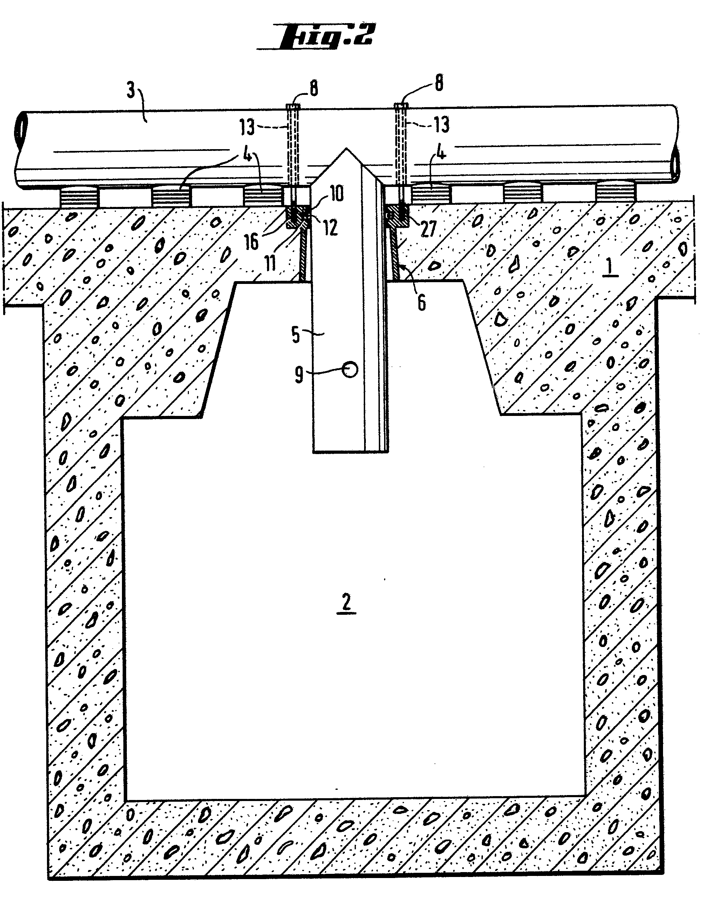

Das zweite Ausführungsbeispiel (Fig. 2) unterscheidet sich von dem ersten lediglich in der Fixierung der Drainagerohre 3 auf dem Filterboden 1. Die Rohrschellen 7 sind ersetzt durch Schrauben 8, die, in einem Schutzrohr 13 geführt, die Drainagerohre 3 längs ihres vertikalen Durchmessers durchsetzen. Sie sind in Gewinde 16 eingeschraubt, die in nach außen ragenden Vorsprüngen 27 des Flansches 10 am oberen Ende der Verbindungselemente 6 vorgesehen sind. Die Vorsprünge 27, die sich auf dem Umfang des Flansches 10 diametral gegenüberliegen, müssen bezüglich der Längsachse aller Drainagerohre 3 die gleiche Lage haben, um ein Einschrauben der Schrauben 8 durch die vorfabrizierten Drainagerohre 3 mit den fabrikmäßig eingesetzten Schutzrohren 13 hindurch zu ermöglichen. Diese, durch die Vorsprünge 27 ausgezeichnete Vorzugsrichtung der Verbindungselemente 6 hat beispielsweise bezüglich der Längsachse des Sammelkanals 2 eine Winkellage von 90°. Eine Vorrichtung, mit der diese Vorzugsrichtung für alle Verbindungselemente 6 relativ zur Längsachse des Sammelkanals 2 beim Einbetonieren der Elemente 6 während des Erstellens des Filterbodens 1 eingehalten werden kann, ist Gegenstand der europäischen Patentanmeldung 0 019 655.

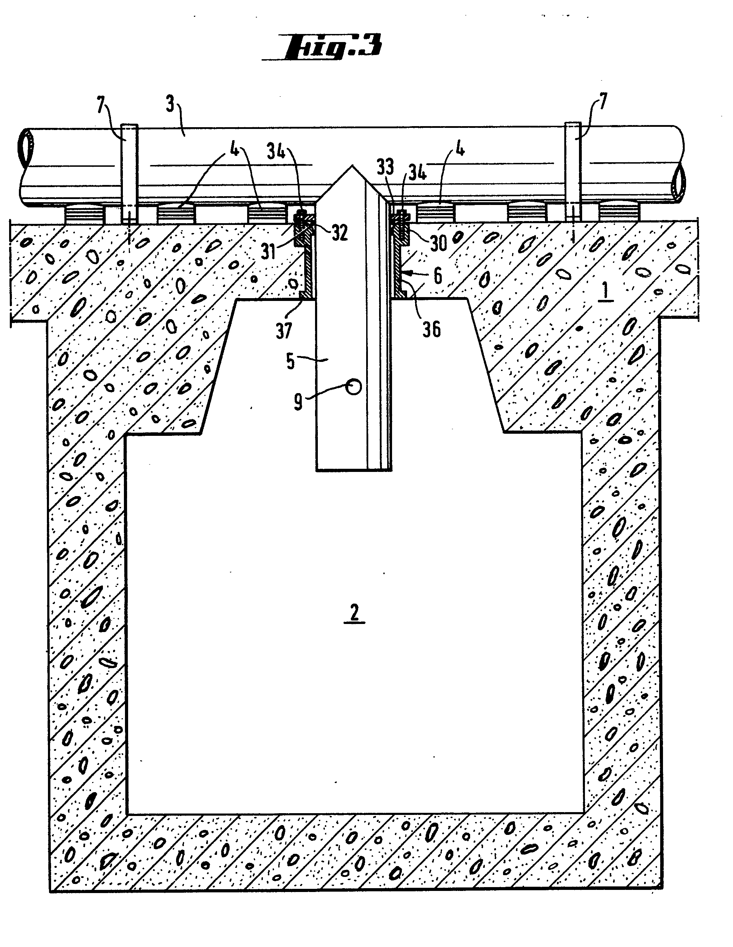

Fig. 3 zeigt eine etwas andere Form der Verbindungselemente 6; diese bestehen hier aus einer zylindrischen Büchse 36, die an ihrem oberen Ende wiederum einen Flansch 30 aufweist. Gegen ein Herausschieben aus dem Filterboden 1 infolge Druckbelastungen von unten — beispielsweise durch Überdrücke der Spülmedien — ist die zylindrische Büchse 36 durch einen zweiten Flansch 37 an ihrem unteren Ende gesichert.

Der obere Flansch 30 ist durch eine Schrägfläche 31 begrenzt; die dadurch entstehende Vertiefung dient zur Aufnahme eines Dichtungselements 32, das durch einen Abschlußring 33 gegen das Tauch- und Anschlußrohr 5 gepreßt wird. Der Abschlußring 33 ist durch auf seinem Umfang verteilte Schraubenbolzen 34 gehalten, die in entsprechende Gewindebohrungen im oberen Flansch 30 eingeschraubt werden.

## Patentansprüche

1. Filteranlage, insbesondere für die Wasseraufbereitung, mit mindestens einem rückspülbaren Filterfeld, in dem als Durchgangsorgane für das gefilterte Medium Filterdüsen vorhanden sind, die in mindestens einem, mit den Düsenköpfen nach unten auf dem betonierten Boden des Filterfeldes lösbar fixierten Drainagerohr aufgereiht sind, das seinerseits über ein in ein unter dem Filterboden angeordnetes Filtrat-Sammelrohr eintauchendes Tauchrohr mit diesem verbunden ist, wobei die Anlage darüber hinaus mit einer Rückspülvorrichtung zur periodischen Reinigung der Filtermasse mit Hilfe von Druckluft und Druckwasser ausgerüstet ist, und das Sammelrohr gleichzeitig als Zuleitung für mindestens ein Rückspülmedium dient, dadurch gekennzeichnet, daß in den die Decke eines Filtrat-Sammelkanals (2) bildenden Boden (1) des Filterfeldes ein manschettenartiges Verbindungselement (6, 36) einbetoniert ist, in das das Tauchrohr (5) gasdicht einsteckbar ist.

2. Anlage nach Anspruch 1, dadurch gekennzeichnet, daß das Verbindungselement (6, 36) an seinem filterseitigen Ende einen flanschartigen Ansatz (10, 27, 30) aufweist, und die Mittel zur Fixierung des Drainagerohres (3) in dieses durchsetzenden Schraubenbolzen (8) bestehen, die in den flanschartigen Ansatz (10, 27) des Verbindungselementes (6) eingeschraubt sind.

3. Anlage nach Anspruch 2, dadurch gekennzeichnet, daß die Winkellage der Gewindebohrungen (16) in dem flanschartigen Ansatz (10, 27) des Verbindungselementes (6) relativ zur Achse des Drainagerohres (3) fixiert ist.

4. Anlage nach Anspruch 1, dadurch gekennzeichnet, daß zwischen Verbindungselement (6) und Tauchrohr (5) ein Dichtelement (12, 32) vorgesehen ist, welches das Filterfeld gegen den Sammelkanal (2) abschließt.

## Claims

1. A filter installation, more particularly for water treatment, comprising at least one backwashable filter bed containing strainers as means through which the filtered medium has to pass, said strainers being arranged in line in at least one drainage pipe detachably fixed with the strainer heads extending downwardly on the concreted base of the filter bed, said drainage pipe in turn being connected to the filtrate collecting main under the filter bed via an immersed pipe extending into said main, the installation further comprising a backwashing system for periodic cleaning of the filter material by means of compressed air and water under pressure, the main also serving as a supply line for at least one backwashing medium, characterised in that a connecting element (6, 36) in the form of a sleeve is concreted into the base (1) of the filter bed forming the top of the filtrate collecting main (2), the immersed pipe (5) being adapted to be fitted in gas-tight relationship into said connecting element (6, 36).

2. An installation according to claim 1, characterised in that the connecting element (6, 36) has a flange-like projection (10, 27, 30) at its end adjacent the filter and the means for fixing the drainage pipe (3) comprise screw bolts (8) which extend through the drainage pipe and are screwed into the flange-like projection (10, 27) of the connecting element (6).

3. An installation according to claim 2, characterised in that the angular position of the screw-threaded bores (16) in the flange-like projection (10, 27) of the connecting element (6) is fixed in relation to the axis of the drainage pipe (3).

4. An installation according to claim 1, characterised in that a sealing element (12, 32) is provided between the connecting element (6) and the immersed pipe (5) and seals off the filter bed from the main (2).

## Revendications

1. Installation de filtration, en particulier pour le traitement d'eau, comportant au moins une étendue de filtration lavable à contre-courant, dans laquelle les organes de passage pour le milieu filtré sont présents sous forme de buses de filtration qui sont alignées dans au moins un tuyau de drainage fixé amoviblement aux têtes de buse vers le bas sur le fond bétonné de l'étendue de filtration et qui, de son côté, est relié à celui-ci par l'intermédiaire d'un tuyau de plongé plongeant dans un tube collecteur de filtrat disposé en dessous du fond de filtration, l'installation étant équipée en outre d'un dispositif de lavage à contre-courant pour le nettoyage périodique de la masse de filtration à l'aide d'air sous pression et d'eau sous pression, et le tuyau collecteur servant en même temps de conduite pour au moins un milieu de rinçage à contre-courant, caractérisée en ce que dans le fond (1) de l'étendue de filtration, formant la couverture d'un canal collecteur de filtrat (2), est bétonné un élément de liaison (6, 36) du type manchon dans lequel peut être introduit de façon étanche aux gaz le tuyau de plongée (5).

2. Installation selon la revendication 1, caractérisée en ce que l'élément de liaison (6, 36) présente à son extrémité du côté filtre un appendice (10, 27, 30) en forme de bride et en ce que les moyens pour fixer le tuyau de drainage (3) sont constitués par des boulons filetés (8) traversant celui-ci et qui sonst vissés dans l'appendice (10, 27) en forme de bride de l'élément de liaison (6).

3. Installation selon la revendication 2, caractérisée en ce que la position angulaire des alésages taraudés (16) dans l'appendice (10, 27) en forme de bride de l'élément de liaison (6) est fixée par rapport à l'axe du tube de drainage (3).

4. Installation selon la revendication 1, caractérisée en ce que, entre l'élément de liaison (6) et le tuyau de plongée (5) se trouve un élément d'étanchéité (12, 32) qui ferme l'étendue de filtrage par rapport au canal collecteur (2).

# Fig.1

Fig.2

# Fig:3